# EUROPEAN PATENT APPLICATION

(11) **EP 1 968 026 A1**
(43) Date of publication of application: **10.09.2008**
(21) Application number: 06722058.2
(22) Date of filing: 16.03.2006
(51) Int. Cl.: G08B 17/06, G01K 7/16

(54) **LINEAR FIRE-DETECTOR ALARMING SYSTEM BASED ON DATA FUSION AND THE METHOD**

(30) Priority: 31.12.2005 CN 200510137648
(71) Applicant: Li, Gangjin, Capital International Airport Beijing 101304 (CN); Zhang, Weishe, Capital International Airport Beijing 101304 (CN)
(72) Inventor: Li, Gangjin, Capital International Airport Beijing 101304 (CN); Zhang, Weishe, Capital International Airport Beijing 101304 (CN)
(74) Representative: Ebner von Eschenbach, Jennifer
(86) International application number: PCT/CN2006/000405
(87) International publication number: WO 2007/076642

(57) **Abstract**

A system and a method of data fusion fire alarm, wherein at least one line type temperature sensing element is used to detect and produce values of at least two nonequivalent electric parameters, namely, a first electric parameter a and a second electric parameter b at a certain time; the values of the two nonequivalent electric parameters are transmitted to an electric signal measuring device, and are used to obtain a function value at the time by a data fusion device according to a predetermined function having at least the first electric parameter and the second electric parameter, then the obtained function value is compared with a predetermined value; whether to send out a fire alarm signal is judged according to the comparative result, and starting a fire alarm device if necessary. Another technical solution may use two line type temperature sensing element, which detect and produce two nonequivalent electric parameters, namely a first electric parameter and a second electric parameter respectively. Also, two types of nonequivalent electric parameters at two different times may be detected sequentially.

## Description

### Technical Field

The present invention relates to a data fusion alarm system and method for a line type fire detector. At least two types of nonequivalent electric parameters from a line type temperature sensing element are collected in real time by means of an electric signal measuring device in the present invention, and the at least two types of nonequivalent electric parameters are data fused, and it is determined whether a fire-alarm, e.g. a rate-of-rise temperature, a fixed temperature or a rate-of-rise and fixed temperature fire alarm, is necessary according to the result of the data fusion.

### Description of the Prior Art

In the prior art, common used line type fire detector of fixed temperature, rate-of-rise temperature or rate-of-rise and fixed temperature is a kind of widely used line type fire detector, key feature of which lies in that said fire detector detects a kind of electric signal of the line type sensing element by using a line type temperature sensing element (air pipe or cable type NTC temperature sensing cable, or cable type thermocouple temperature sensing cable), and performs a rate-of-rise temperature or fixed temperature fire alarm according to the comparative result of the detected value and the predetermined value of fire alarm. However, the value and change rate of the electric parameter obtained in this way can not completely reflect the value and change rate of the temperature of the heated portion of the temperature sensing element, and can only reflect the integrated result of the two key parameters, namely the temperature and the length of heated portion of the line type temperature sensing element of the detector. An eligible line type fire detector must pass an action test and an inaction test under certain test condition according to the techNICal standard of the line type fire detector, and whether a line type fire detector is eligible is mainly judged by a single parameter, namely the temperature of the heated portion of the temperature sensing element.

Therefore, the line type fire detector using a single temperature sensing element and performing a fire alarm according to the detecting result of a single electric parameter in the prior art can not precisely measure the value and change rate of the temperature of the heated portion of the temperature sensing element, thus can not precisely alarm under fire condition, and thereby it is difficult for said line type fire detector to pass the action and inaction test according to the techNICal standard of the line type fire detector. There is a need for a data fusion fire alarm system and method capable of reflecting not only the value but also the change rate of the temperature.

### Summary of the Invention

It is an object of the present invention to provide a method of data fusion fire alarm, in which at least two types of nonequivalent electric parameters from a line type temperature sensing element are used, and the at least two types of nonequivalent electric parameters are data fused, then a fire-alarm, namely a rate-of-rise temperature or a fixed temperature fire alarm is performed according to the result of the data fusion. The present invention can eliminate the influence of the heated length of the temperature sensing element of the line type temperature detector to its fire alarm function, thereby the alarm accuracy of the detector may be increased and the error alarm ratio may be decreased effectively.

Another object of the present invention is to provide a data fusion fire alarm system having at least one line type temperature sensing element capable of detecting ay least two different nonequivalent electric parameters. In the system, at least two types of detected nonequivalent electric parameters are sent to e.g. an electric signal measuring device, and are fused and calculated in one data fusion device, then one comparator compares the result with a threshold; a device determines whether to perform an alarm according to the comparative result, then performs a fire alarm, that is, performs a rate-of-rise temperature or fixed temperature fire alarm.

The aforesaid object of the present invention is achieved by the following technical solution. The method of data fusion fire alarm according to the present invention comprises the steps of using one line type temperature sensing element which may produce at least two nonequivalent electric parameters to be detected, namely a first electric parameter a and a second electric parameter b; detecting values a1, b1 of the first electric parameter a and the second electric parameter b of the line type temperature sensing element at certain time t1 in real time; inputting the values a1, b1 of the first electric parameter and the second electric parameter detected at the time into a data fusion device for calculating and judging, which obtains the function value f (a1, b1, ...) at the time according to the predetermined function f (a, b, ...) having at least the first electric parameter a and the second electric parameter b, and compares the obtained function value f (a1, b1, ...) with a predetermined value d; transmitting the comparative result outputted from the data fusion device to the fire alarm device to send out a fire alarm signal.

Another technical solution according to the present invention comprises the steps of using two line type temperature sensing element to produce two nonequivalent electric parameters to be detected, namely a first electric parameter a and a second electric parameter b; detecting values a1, b1 of the first electric parameter a and the second electric parameter b of the line type temperature sensing element at certain time t1 in real time respectively; inputting the values a1, b1 of the first electric parameter and the second electric parameter detected at the time into a data fusion device for calculating and judging, which obtains a function value f (a1, b1, ...) at the time according to the predetermined function f (a, b, ...) having at least the first electric parameter a and the second electric parameter b, and compares the obtained function value f (a1, b1, ...) with a predetermined value d; transmitting the comparative result outputted from the data fusion device to an electric signal measuring device of the fire alarm device, by which whether to send out a fire alarm signal is judged and performed.

Another technical solution according to the present invention may use three or two line type temperature sensing elements to produce more than two nonequivalent electric parameters to be detected, namely a first electric parameter a and a second electric parameter b, a third electric parameter c etc. the three electric parameters may be detected and data fused, and a fire alarm may be performed according to the result of the data fusion, which may be determined by the particular circumstance of the location to be detected.

The present invention has the following advantages over the prior art:
1. Since at least two nonequivalent electric parameters of the line type temperature sensing elements are combined together for consideration in the present invention, the influence of the heated length of the temperature sensing element of the line type temperature detector to its fire alarm function may be eliminated, and the alarm accuracy of the detector may be increased and the error alarm ratio may be decreased effectively.
2. The temperature sensing elements of the present invention is reversible, thereby, after the alarm, the temperature sensing element may recover to its original state with the release of the alarm and the natural recovery of the circumstance temperature, thus, the temperature sensing elements may be used repeatedly.

### Brief description of the drawings

The present invention will be further described below with reference to the accompanying drawings and the preferred embodiments.
Fig. 1A is a diagrammatic view of a data fusion alarm system according to the present invention having one line type temperature sensing element;
Fig. 1B is a diagrammatic view of a data fusion alarm system according to the present invention having two line type temperature sensing elements;
Fig. 2A is the flow char 1 of the signal of the data fusion alarm method according to the present invention;
Fig. 2B is the flow char 2 of the signal of the data fusion alarm method according to the present invention.

### Description of the preferred embodiment

### The first embodiment:

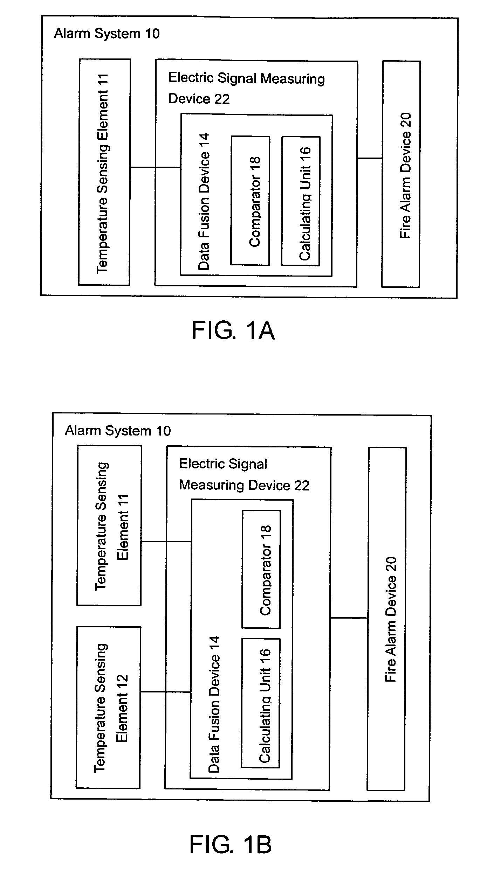

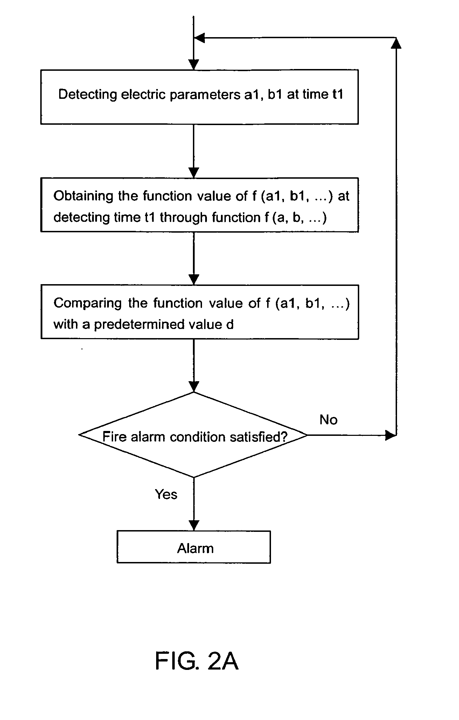

Referring to the data fusion alarm system 10 of present invention in fig. 1A, and the signal processing flow chart 1 of the data fusion alarm method of the present invention in fig. 2A, the data fusion alarm system 10 of the present invention has a line type temperature sensing element 11, which is positioned in the monitored location in a conventional manner, however, the line type temperature sensing element may produce two types of nonequivalent electric parameters to be detected, namely electric parameters a and b.

So called nonequivalence of the electric parameters a, b means that in the condition that the heated length of line type temperature sensing element can not be determined, during the laboratory and practical temperature increasing test or temperature decreasing test of the line fire detector, a serial of data of a, b detected at each point of time do not form certain function relationship, namely a≠1(b) or b≠f2(a), that is, the particular value b1 (or a1) of the electric parameter b (or a) at time t1 can not be calculated by the particular value a1 (or b1) of the electric parameter a (or b) at time t1 using a certain function relationship.

After the particular values a1, b1 of the first electric parameter a and the second electric parameter b at certain time (or a first time) are detected by the line type temperature sensing element 11, the derived particular value a1, b1 of the electric parameters are inputted into a data fusion device 14 for calculating and judging; a predetermined function f (a, b, ...) having at least a first electric parameter a and a second electric parameter b is included in the calculating unit 16 of the data fusion device, thus the function value f (a1, b1, ...) of the first electric parameter a and the second electric parameter b at test time t1 is derived; then the derived function value f (a1, b1, ...) is compared with a predetermined value d set in the comparator 18 of the data fusion device. The comparative result is outputted from the data fusion device 14, then the electric parameter measuring device 22 judges whether to send out a fire alarm signal for starting a fire alarm device 20. The data fusion device may be a part of the electric parameter measuring device.

In the present embodiment, the selection of two electric parameters a, b from one line type temperature sensing element has, but not limited to the following modes:
1. The selected line type temperature sensing element is a NTC type temperature sensing cable (temperature sensing cable of negative temperature coefficient character), a pair signal output ends of which produce two nonequivalent electric parameter signals, namely, the capacitance a and resistance b.
2. The selected line type temperature sensing element is a temperature sensing cable of continuous thermocouple type, a pair signal output ends of which produce two nonequivalent electric parameter signals, namely, the capacitance a and voltage b.
3. The selected line type temperature sensing element is a PTC type temperature sensing cable (temperature sensing cable of positive temperature coefficient character), a pair signal output ends of which produce two nonequivalent electric parameter signals, namely, the time constant a and resistance b.
4. The selected line type temperature sensing element is a NTC type temperature sensing cable, a pair signal output ends of which produce two nonequivalent electric parameter signals, namely, the voltage a and resistance b.
5. The selected line type temperature sensing element is a temperature sensing cable of continuous thermocouple type, a pair signal output ends of which produce two nonequivalent electric parameter signals, namely, the voltage a and resistance b.
6. The selected line type temperature sensing element is a long (such as 50-300 meters) metal wire of PTC character, and the two electric parameter signals, namely resistance signal a of two ends of the wire and electric signal b of natural frequency (resonance frequency) of ultrasonic vibration of the wire are nonequivalent.
7. The selected line type temperature sensing element is quartz crystal silk, and the two electric parameter signals, namely capacitance signal a of two ends of the quartz crystal silk and electric signal b of natural frequency (resonance frequency) of AC vibrate of the quartz crystal silk are nonequivalent.

### The second embodiment

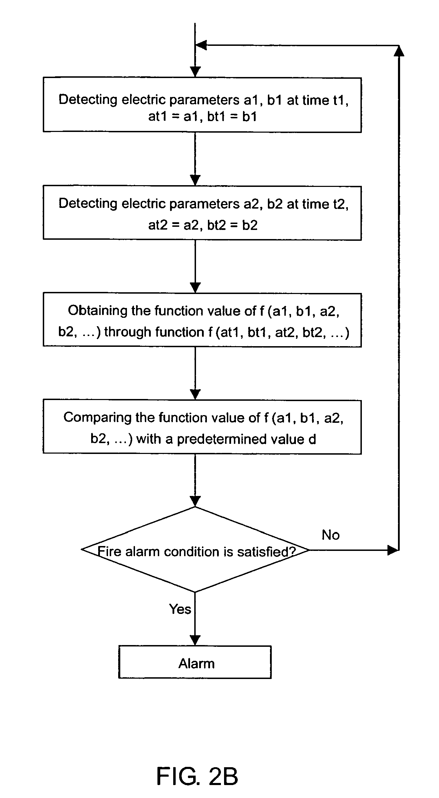

Referring to the signal processing flow chart 2 of the data fusion alarm method of the present invention of fig. 2B, the method used in the data fusion fire alarm system of the present invention also uses a line type temperature sensing element 11, which can produce two nonequivalent electric parameters a and b. The line type temperature sensing element 11 detects the particular value a1, b1 of a first electric parameter a and a second electric parameter b at the time t1, and then detects the particular value a2, b2 of the first electric parameter a and the second electric parameter b at the time t2.

The particular value a1, b1, a2, b2 derived at the time t1, t2 is inputted into the data fusion device 14 for calculating and judging, the calculating unit 16 of which has a predetermined function f(aₜ₁, bₜ₁, aₜ₂, bₜ₂, ...) having at least the values aₜ₁, bₜ₁, aₜ₂, bₜ₂ of first electric parameter a and second electric parameter b detected at time t1 and t2 (wherein aₜ₁, bₜ₁ are the detected value of first electric parameter a and second electric parameter b at time t1, and aₜ₂, bₜ₂ are the detected value of first electric parameter a and second electric parameter b at time t2 ), thereby a function value f(a1, b1, a2, b2, ...) is derived. Then the derived function value f(at1, bt1, at2, bt2, ...) is compared with a predetermined value d set in a comparator 18 of the data fusion device. The comparative result is outputted from the data fusion device 14, and whether to send out a fire alarm signal is determined by the electric signal measuring device 22 according to the comparative result, so as to start the fire alarm device 20. In the present embodiment, the method of selection of two electric parameters a, b from a line type temperature sensing element is the same as, but not limited to the description in the first embodiment.

### The third embodiment

Now referring to the schematic view of the data fusion alarm system of the present invention having two line type temperature sensing elements shown in fig. 1B, and the signal processing flow chart 1 of data fusion alarm method of the present invention shown in fig. 2A, another line type temperature sensing element 12 shown in fig. 1B is also connect to the data fusion device 14. The one line type temperature sensing element 11 detects the particular value a1 of the first electric parameter a at time t1, and the other line type temperature sensing element 12 detects the particular value b1 of the first electric parameter b at time t1, herein the particular values a1, b1 of the first electric parameter a and the second electric parameter b derived from the two line type temperature sensing elements at time t1 are nonequivalent. The particular values a1, b1 of the first electric parameter a and the second electric parameter b detected by two line type temperature sensing elements 11 and 12 at time t1 respectively will be inputted into the data fusion device 14 for calculating and judging; the calculating unit 16 of the data fusion device has a predetermined function f(a, b, ...) including at least the first electric parameter a and the second electric parameter b, thereby a function value f(a1, b1, ...) of the first electric parameter a and the second electric parameter b at time t1 is derived; the derived function value f(a1, b1, ...) is compared with the predetermined value d set in the comparator 18 of the data fusion device. The data fusion device 14 outputs the comparative result, and whether to send out a fire alarm signal is determined by the electric signal measuring device to start the fire alarm device 20.

In the present embodiment, the selection of two electric parameters a, b from two line type temperature sensing elements has, but not limited to the following modes:
1. The two selected line type temperature sensing elements 11, 12 have different types, for example, one is a NTC line type sensing element, and the other is a thermocouple line type temperature sensing element. Typically, the electric parameters of different types of line type temperature sensing elements are nonequivalent.
2. The selected two line type temperature sensing elements 11, 12 have the same type of electric parameter. However, the change rate of the electric parameter relative to the temperature (also mentioned as temperature coefficient) is different, e.g., the types of conductive filling materials or content of the conductive filling materials in the NTC line type sensing element are different. This may result in different resistance-temperature coefficients of the NTC line type temperature sensing elements, and thus nonequivalent electric parameters of the two temperature sensing elements 11, 12.
3. The selected two temperature sensing elements 11, 12 are physically the same, but have different types of the electric parameters outputted from the temperature sensing elements. For instance, both of two temperature sensing elements 11, 12 use a same thermocouple line type temperature sensing element, one of which outputs resistance signal, and the other of which outputs voltage signal resulted from heating. Alternatively, both of two temperature sensing elements 11, 12 use a NTC line type temperature sensing element, one of which outputs resistance signal, and the other of which outputs time constant signal.

Typically, the two line type temperature sensing elements are disposed in parallel. So called "in parallel" means that during the fire experiment and the laboratory test, the two temperature sensing elements are disposed separately or combined together with substantially same or proportional length. When the two line type temperature sensing elements are combined together, the components or elements consisting of the temperature sensing element may be common or combined to simplify the structure, such that the two line type temperature sensing elements form an unseparated integral unit.

### The fourth embodiment

Now referring to the schematic view of the data fusion alarm system of the present invention having two line type temperature sensing elements shown in fig. 1B, and the signal processing flow chart 2 of data fusion alarm method of the present invention shown in fig. 2A, another line type temperature sensing element 12 in fig. 1B is also connect to the data fusion device 14. The two line type temperature sensing elements 11, 12 detect the particular values a1, b1 of the first electric parameter a, the second electric parameter b at time t1; and then detect the particular values a2, b2 of the first electric parameter a, the second electric parameter b at time t2; herein the first electric parameter a and the second electric parameter b are nonequivalent.

The particular values a1, b1, a2, b2 of the first electric parameter a and the second electric parameter b detected by two line type temperature sensing elements 11 and 12 at time t1, t2 will be inputted into the data fusion device 14 for calculating and judging; the calculating unit 16 of the data fusion device has a predetermined function f(aₜ₁, bₜ₁, aₜ₂, bₜ₂, ...) having at least detected values aₜ₁, bₜ₁, aₜ₂, bₜ₂ of the first electric parameter a and the second electric parameter b at two time (wherein aₜ₁, bₜ₁ are the detected values of he first electric parameter a and the second electric parameter b at a moment, and aₜ₂, bₜ₂ are the detected value of the first electric parameter a and the second electric parameter b at another time point), thereby a function value f(aₜ₁, bₜ₁, aₜ₂, bₜ₂, ...) is derived. The derived function value f(aₜ₁, bₜ₁, aₜ₂, bₜ₂, ...) is compared with a predetermined value d set in the comparator 18 of the data fusion device. The data fusion device 14 outputs the comparative result, and whether to send out a fire alarm signal is determined by the electric signal measuring device 22 so as to start the fire alarm device 20 according to the comparative result.

In the present invention, the function f may be referred as a data fusion function. The data fusion function is a function relative to the temperature T of the heated portion of the line type temperature sensing element, that is, f may be any function which directly or indirectly reflects the temperature T or temperature increasing rate T' of the heated portion of the line type temperature sensing element, that is, f(a, b, ...)=g1(T), or f(a, b, ...)=h1(T'), f(aₜ₁, bₜ₁, aₜ₂, bₜ₂, ...)=g2(T), or f(aₜ₁, bₜ₁, aₜ₂, bₜ₂, ...)=h2(T'). The specific form of f my be determined by using a method of theoretical analysis and calculation, or a method of regression analysis with test data, or a method combining the theoretical calculation and experimental data, with passing the action and inaction experiment of the line type fire detector as a precondition.

In the present invention, what the function f (a, b, ...) calculates is an alarm parameter, wherein the alarm parameter to be detected and calculated may be more than two kinds, e.g. all aforesaid parameters. The predetermined value d is the alarm threshold of alarm parameter of f (a, b, ...). The function f (a, b, ...) and the electric parameters a, b, ..., form a corresponding function relationship, which may be expressed by a table, a formula or a curve. The mode of comparing the derived value f (a1, b1, ...) with the predetermined value d may be selectively set as one of the followings: alarm when the value of the function f is greater than the predetermined value d; alarm when the value of the function f is smaller than the predetermined value d; alarm when the value of the function f is greater than or equal to the predetermined value d; alarm when the value of the function f is smaller than or equal to the predetermined value d; alarm when the value of the function f is equal to the predetermined value d.

In the present invention, the time period Δt (Δt = t2 - t1) is determined in advance as required, and may be equal to the alarm response time of the line type fire detector, also may be equal to other time period set as required, and typically is in the range from 0.2 min to 5 min.

In the present invention, the predetermined value d may be a constant, or may be a relative constant, that is, the predetermined value d may vary as the temperature, humidity of the environment where the line type temperature sensing element is positioned, the length and the temperature of the heated portion vary. That is, the predetermined value d is a quaternion function of the variety of the temperature of the environment, humidity of the environment, the length of the heated portion, temperature of the heated portion. When some of the parameters of temperature, humidity of the environment and the length, temperature of the heated portion remain constant, the threshold is a function of the remaining parameters. The values of the temperature, humidity of the environment and the length, temperature of the heated portion may be values at time t1, or values at time t2, or values at time between t1, t2, or weighted average values of the values at time t1 and t2.

Since the detection of the present falls in the scope of static measurement, said time is not required to be an absolute time, but may allow a relative large time delay with a premise that excess error that may influence the alarm is not produced.

In the present invention, the electric parameters a, b of the temperature sensing element may be signals such as voltage, current, resistance, capacitance, inductance, time constant, and natural frequency (resonance frequency), or may be the change rate of the aforesaid signals. When a portion of or entire the temperature sensing element is heated, values of the electric parameters vary, and a fixed temperature alarm or rate-of-rise temperature alarm may be performed according to the value or the change rate of the value of the electric parameters.

In the present invention, the reason why nonequivalence of the electric parameters a, b is required is that only in this situation, the two electric parameters a, b may be fused to produce an alarm parameter, and the principle is as follow:

The electric parameters a, b respectively depend on the length L and temperature T (or temperature increasing rate T') of the heated portion of the line type temperature sensing element, as well as other factors, that is, a = f1 (L, T, ...) (or a = f1 (L, T', ...)), b = f2 (L, T, ...) (or b = f2 (L, T', ...)). The aforesaid two equations may be determined by using a method of theoretical analysis and calculation, or a method of regression analysis with test data, or a method combining the theoretical calculation and experimental data. The aforesaid two equations form a system of equation in two unknowns having L, T (or T') as variables when the two electric parameters a, b are nonequivalent. The equation expression having only one variable L (or T or T') may be obtained when solving the equations using an elimination method, substitution method or other methods. The particular values of L, T (or T') may be determined after the particular values of a, b are determined, and represent the range and extent of fire. The line type element performs a fixed temperature alarm according to the value of T, and performs a rate-of-rise temperature alarm according to the value of T'. When the factors L, T influencing the two electric parameters of the line type temperature sensing can not be derived from the aforesaid equations, an equation should be added, which may be achieved by adding a line type temperature sensing element (that is, output a corresponding electric parameter), e.g. when a thermometer with contacts or hygrometer can not reflect the temperature and humidity of the mounting field as a whole because of the variance of the environmental temperature and humidity of the line type temperature sensing element.

One essence of the present invention is the selection of the two or more nonequivalent electric parameters to be detected, and whether to alarm is precisely judged by fusion calculating and comparing of said a plurality of electric parameters. Herein, the protection scope of the present invention is described in the claims. However, all modifications including the essence of the present invention without departing from the spirit of the present invention are within the protection scope of the present invention.

## Claims

1. A method of data fusion fire alarm, wherein the method comprising the steps of: using at least one line type temperature sensing element which may produce at least two nonequivalent electric parameters to be detected, namely, a first electric parameter a and a second electric parameter b; detecting values a1, b1 of the first electric parameter and the second electric parameter of the line type temperature sensing element at certain time t1 in real time; transmitting the values a1, b1 of the first electric parameter and the second electric parameter to a data fusion device for calculating and comparing, which obtains the function value f (a1, b1, ...) at time t1 according to the predetermined function f (a, b, ...) having at least the first electric parameter a and the second electric parameter b, and compares the obtained function value f (a1, b1, ...) with a predetermined value d; then judging whether to send out a fire alarm signal according to the comparative result outputted from the data fusion device, and starting a fire alarm if necessary.

2. A method of data fusion fire alarm, wherein the method comprising the steps of: using at least one line type temperature sensing element which may produce at least two nonequivalent electric parameters to be detected, namely, a first electric parameter a and a second electric parameter b; detecting values a1, b1 of the first electric parameter a and the second electric parameter b of the line type temperature sensing element at a first time t1, and values a2, b2 of the first and second electric parameters a, b of the line type temperature sensing element at a second time t2 in real time; inputting the particular values a1, b1, a2, b2 of the two electric parameters detected at the first time t1 and the second time t2 into a data fusion device for calculating and comparing, which obtains a function value f (a1, b1, a2, b2, ...) according to a predetermined function f (aₜ₁, bₜ₁, aₜ₂, bₜ₂, ...) having at least the detected values aₜ₁, bₜ₁, aₜ₂, bₜ₂, of the first electric parameter a and the second electric parameter b at the two times, and compares the obtained function value f (a1, b1, a2, b2, ...) with a predetermined value d; then judging whether to send out a fire alarm signal according to the comparative result outputted from the data fusion device, and starting a fire alarm if necessary.

3. The method of data fusion fire alarm according to claims 1 or 2, wherein the detection of the two electric parameters a, b can be performed in one of the following ways, but not limited to the following ways: (1) selecting the line type temperature sensing element as a NTC type temperature sensing cable, and detecting two nonequivalent electric parameter signals, namely, the capacitance and resistance outputted between a pair of signal output ends; (2) selecting the line type temperature sensing element as a temperature sensing cable of continuous thermocouple type, and detecting two nonequivalent electric parameter signals, namely, the capacitance and voltage outputted between a pair of signal output ends; (3) selecting the line type temperature sensing element as a PTC type temperature sensing cable, and detecting two nonequivalent electric parameter signals, namely, the time constant and resistance outputted between a pair of signal output ends; (4) selecting the line type temperature sensing element as a NTC type temperature sensing cable, and detecting two nonequivalent electric parameter signals, namely, the voltage and resistance outputted between a pair of signal output ends; (5) selecting the line type temperature sensing element as a temperature sensing cable of continuous thermocouple type, and detecting two nonequivalent electric parameter signals, namely, the voltage and resistance outputted between a pair of signal output ends; (6) selecting the line type temperature sensing element as a long wire of PTC characteristics, and detecting two nonequivalent electric parameter signals, namely, resistance signal of two ends of the wire and electric signal of natural frequency of ultrasonic vibration of the wire; (7) selecting the line type temperature sensing element as quartz crystal silk, and detecting two nonequivalent electric parameter signals, namely, capacitance signal of two ends and a signal of natural frequency of AC oscillation of the quartz crystal silk.

4. A method of data fusion fire alarm, wherein the method comprising the steps of: using one and another line type temperature sensing elements which may produce two nonequivalent electric parameters to be detected, namely, a first electric parameter a and a second electric parameter b respectively; detecting value a1 of the first electric parameter of the one line type temperature sensing element, value b1 of the second electric parameter of the other line type temperature sensing element at a certain time t1 in real time respectively; transmitting the values a1, b1 of the first electric parameter and the second electric parameter into a data fusion device for calculating and comparing, which obtains the function value f (a1, b1, ...) of the time t1 according to the predetermined function f (a, b, ...) having at least the first electric parameter a and the second electric parameter b, and compares the obtained function value f (a1, b1, ...) with a predetermined value d; then judging whether to send out a fire alarm signal according to the comparative result outputted from the data fusion device, and starting a fire alarm if necessary.

5. A method of data fusion fire alarm, wherein the method comprising the steps of: using one and another line type temperature sensing elements which may produce two nonequivalent electric parameters to be detected, namely, a first electric parameter a and a second electric parameter b respectively; detecting particular values a1, b1 of the first electric parameter a and the second electric parameter b of the line type temperature sensing element at a first time t1, and particular values a2, b2 of the first electric parameter a and the second electric parameter b of the line type temperature sensing element at a second time t2 in real time respectively; transmitting the particular values a1, b1, a2, b2 of the two electric parameters detected at a first time t1 and a second time t2 into a data fusion device for calculating and comparing, which obtains the function value f (a1, b1, a2, b2, ...) according to a predetermined function f (aₜ₁, bₜ₁, aₜ₂, bₜ₂, ...) having at least the detected values aₜ₁, bₜ₁, aₜ₂, bₜ₂ of the first electric parameter a and the second electric parameter b at the two times, and comparing the obtained function value f (a1, b1, a2, b2, ...) with a predetermined value d; then judging whether to send out a fire alarm signal according to the comparative result, and starting a fire alarm if necessary.

6. The method of data fusion fire alarm according to claims 4 or 5, wherein the detection of the nonequivalent first and second electric parameters a, b can be performed in one of the following ways, but not limited to the following ways: (1) selecting two different types of line type temperature sensing elements, one of which is a NTC line type sensing element, the other of which is a thermocouple line type temperature sensing element; typically, the electric parameters of different types of line type temperature sensing elements being nonequivalent; (2) selecting one and another line type temperature sensing elements 11, 12 which have the same type and but with a different electric parameter depending on the change rate of the temperature, thereby detecting the nonequivalent electric parameters of the one and another temperature sensing elements; and (3) selecting one and another temperature sensing elements which are entirely and physically the same, however different types of the electric parameters outputted from the temperature sensing elements being detected.

7. The method of data fusion fire alarm according to any of the claims 1, 2, 4 and 5, wherein the predetermined value d may be a relative constant, that is, the predetermined value d may vary as at least one of the parameters of the length of the heated portion, the temperature of the heated portion, the environment temperature, the environment humidity varies.

8. A system of data fusion fire alarm, wherein the system comprising at least one line type temperature sensing element which may produce values a1, b1 of at least two nonequivalent electric parameters, namely, a first electric parameter a and a second electric parameter b to be detected at a certain time; a data fusion device comprising a calculating unit for calculating and comparing the detected values a1, b1 of first electric parameter and the second electric parameter, wherein the data fusion device obtains the function value f (a1, b1, ...) at time t1 according to a predetermined function f (a, b, ...) having at least the first electric parameter a and the second electric parameter b, the data fusion further comprising a comparator which compares the obtained function value f (a1, b1, ...) with a predetermined value d; an electric measuring device judging whether to send out a fire alarm signal according to the comparative result outputted from the data fusion device; and a fire alarm device for receiving the fire alarm signal and raising alarm.

9. A system of data fusion fire alarm, wherein the system comprising at least two line type temperature sensing elements each of which may produce values a1, b1 of two nonequivalent electric parameters, namely, a first electric parameter a and a second electric parameter b to be detected at a certain time; a data fusion device comprising a calculating unit for calculating and comparing the detected values a1, b1 of the first electric parameter and the second electric parameter, wherein the data fusion device obtains the function value f (a1, b1, ...) at the time t1 according to the predetermined function f (a, b, ...) having at least the first electric parameter a and the second electric parameter b, the data fusion further comprising a comparator which compares the obtained function value f (a1, b1, ...) with a predetermined value d; an electric measuring device judging whether to send out a fire alarm signal according to the comparative result outputted from the data fusion device; and a fire alarm device for receiving the fire alarm signal and raising alarm.

10. The method of data fusion fire alarm according to any of the claims 1, 2, 4 and 5, wherein the data fusion function f is a function relative to the temperature T of the heated portion of the line type temperature sensing element.
